# EUROPÄISCHE PATENTSCHRIFT

(11) **EP 1 703 175 B1**
(45) Veröffentlichungstag und Bekanntmachung des Hinweises auf die Patenterteilung: **20.02.2008**
(21) Anmeldenummer: 06005087.9
(22) Anmeldetag: 13.03.2006
(51) Int. Cl.: F16H 59/02, G05G 9/047

(54) **Fahrzeuggetriebe-Schalthebel mit Schalter zur Steuerung von wenigstens einer Vorrichtung im Fahrzeug**
Gear lever with a switch for controlling of at least a device of a vehicle
Levier de changement de vitesse avec un commutateur de contrôle au moins un dispositif d'un véhicule

(30) Priorität: 14.03.2005 DE 102005011631
(43) Veröffentlichungstag der Anmeldung: 20.09.2006
(73) Patentinhaber: Jopp GmbH, 97616 Bad Neustadt (DE)
(72) Erfinder: Büchs, Hubert P., Dr. Ing., 97618 Leutershausen/Hohenroth (DE)
(74) Vertreter: Trossin, Hans-Jürgen

(56) Entgegenhaltungen:
- EP-A- 0 979 990
- DE-A1- 10 059 794
- DE-A1- 10 241 869
- DE-A1- 19 952 560
- GB-A- 2 327 244

## Beschreibung

Die vorliegende Erfindung betrifft einen Fahrzeuggetriebe-Schalthebel gemäß dem Oberbegriff von Anspruch 1.

Ein derartiger Schalthebel ist aus der DE 100 59 794 A1 bekannt. Diese Druckschrift zeigt einen Schalthebel,dessen Schaltknauf an seiner Oberseite ein um die Schalthebellängsachse drehbares Bedienelement aufweist, das in mindestens zwei unterschiedliche Stellungen bewegbar ist.

Aus der Druckschrift GB 23 27 244 A ist ein Ganghebel bekannt, bei welchem ein Bedienelement eines Schalters längs des Schalthebelschaftes verlagerbar und in unterschiedlichen Positionen festlegbar ist.

Es sind im Stand der Technik außerdem Fahrzeuggetriebe-Schalthebel bekannt, welche an ihrem Griffstück einen Druckschalter aufweisen, um beispielsweise bei einem manuell schaltbaren Getriebe die Sicherheitsblockierung zur Verhinderung eines unbeabsichtigten Einlegens eines Rückwärtsgangs zu entriegeln oder um bei einem automatischen Schaltgetriebe beispielsweise den Fahrzeuggetriebe-Schalthebel aus der Park- oder/und der Neutralstellung zur Verstellung in eine Fahrstellung ("D") zu entriegeln.

Mit Fahrzeuggetriebe-Schalthebel im Sinne der vorliegenden Anmeldung sind daher sowohl Schalthebel für manuelle Fahrzeuggetriebe als auch Automatik-Wählhebel bezeichnet.

Darüber hinaus sind in der Mittelkonsole untergebrachte Multifunktionsschalter bekannt, welche in der Regel mehrere Betätigungsfreiheitsgrade aufweisen, um durch unterschiedliche Betätigungen eine Vielzahl von Funktionen am Fahrzeug steuern zu können. Ein Beispiel für einen solchen Schalter ist der in BMW-Fahrzeugen eingesetzte Bedienschalter des iDrive ®-Systems.

Durch die Anordnung von Multifunktionsschaltern und Fahrzeuggetriebe-Schalthebeln kommt es an der Mittelkonsole, welche nur begrenzt Raum bietet, zu einer hohen Schaltelementendichte, so dass häufig nicht mehr alle Funktionselemente an der Mittelkonsole angeordnet werden können, welche gemäß Herstellervorgaben oder gemäß Kundenwunsch dort vorgesehen sein sollten.

So ist es häufig wünschenswert, in der Mittelkonsole auch Becherhalter vorzusehen, so dass diese vom Fahrer und Beifahrer gemeinsam genutzt werden können. Gerade Becherhalter benötigen jedoch einen verhältnismäßig großen Bauraum zur Aufnahme und zur Sicherung von darin eingestellten Bechern. Dieser Bauraum steht dann, wenn ein Schalthebel und ein Multifunktionsschalter und unter Umständen auch ein Handbremshebel in der Mittelkonsole anzuordnen sind, nicht mehr ohne weiteres zur Verfügung.

Es ist Aufgabe der vorliegenden Erfindung, einen verbesserten Fahrzeuggetriebe-Schalthebel der eingangs genannten Art bereitzustellen, welcher es bei gleicher Funktionalität von Fahrzeuggetriebeschaltung und Steuerung wenigstens einer Vorrichtung im Fahrzeug gestattet, den an der Mittelkonsole vorhandenen Bauraum effizienter als bisher zu nutzen.

Diese Aufgabe wird gemäß der vorliegenden Erfindung gelöst durch einen Fahrzeuggetriebe-Schalthebel mit allen Merkmalen des Anspruchs 1. Eine Ausführungsform eines solchen Schalthebels erstreckt sich längs einer Schalthebellängsachse und ist um eine zur Schalthebellängsachse im Wesentlichen orthogonale Schaltachse zum Schalten eines Fahrzeuggetriebes schwenkbar, wobei an dem Schalthebel ein Schalter vorgesehen ist, welcher unabhängig von einer Schaltbewegung des Schalthebels in einer ersten und einer von der ersten verschiedenen zweiten Betätigungsrichtung betätigbar ist, wobei der Schalter bei Betätigung in der ersten Betätigungsrichtung erste Steuersignale erzeugt und bei Betätigung in der zweiten Betätigungsrichtung zweite Steuersignale erzeugt, welche ersten und zweiten Steuersignale zur Steuerung von wenigstens einer Vorrichtung im Fahrzeug ausgebildet sind.

Konstruktiv besonders einfach ist der Schalter dadurch realisiert, dass er ein Betätigungsteil aufweist, welches die Schalthebellängsachse umgebend vorgesehen ist. In diesem Fall kann der sich längs der Schalthebellängsachse erstreckende Schalthebel als Lagerung des Betätigungsteils dienen. Das Betätigungsteil umschließt vorzugsweise den Schalthebel und die Schalthebellängsachse vollständig, jedoch ist dies nicht zwingend notwendig. Ein Betätigungsteil soll auch dann bereits als die Schalthebellängsachse "umgebend" angesehen werden, wenn es sich nur um einen Teilumfang des Schalthebels erstreckt.

Da das Betätigungsteil im Bereich des schaltachsennahen Längsendes des Schalthebels vorgesehen ist, dient das Betätigungsteil gleichzeitig als Abdeckung der Schalthebellagerung. Das Betätigungsteil kann dann zylindrisch oder unter ergonomischen Gesichtspunkten zylinderartig derart vorgesehen sein, dass die Zylinderachse kürzer als der Zylinderdurchmesser ist.

Durch die Betätigbarkeit unabhängig von einer Schaltbewegung kann der Schalter zu beliebigen Zeitpunkten erste und zweite Steuersignale erzeugen.

Durch die Bereitstellung eines ersten und eines davon verschiedenen zweiten Steuersignals kann mit dem am Schalthebel vorgesehenen Schalter eine große Vielzahl von Steuerungsbefehlen realisiert werden. Mit der Zuordnung der ersten Steuersignale und der zweiten Steuersignale zu unterschiedlichen Betätigungsrichtungen ist darüber hinaus das Risiko einer unerwünschten Fehlbedienung reduziert.

Durch das Vorsehen des Schalters am Schalthebel wird für den Schalter an der Mittelkonsole selbst kein Bauraum benötigt. Dieser steht somit dem Vorsehen anderer Funktionselemente zur Verfügung.

Der Fahrzeuggetriebe-Schalthebel selbst kann dabei ein mechanischer Schalthebel, ein mechatronischer Schalthebel oder ein elektronischer Schalthebel sein, welcher eine Shift-by-Wire-Schaltung des Getriebes ermöglicht.

Eine unerwünschte Fehlbedienung und gute Unterscheidbarkeit der Betätigung des Schalters in den einzelnen Betätigungsrichtungen kann dadurch erhalten werden, dass die erste und die zweite Betätigungsrichtung im Wesentlichen orthogonal zueinander sind.

"Betätigungsrichtung" im Sinne der vorliegenden Anmeldung ist nicht nur eine lineare Betätigungsrichtung sondern auch eine Drehrichtung um eine Drehachse. Vorteilhafterweise ist nämlich der Schalter als Betätigung in der ersten Betätigungsrichtung um eine Drehbetätigungsachse drehbetätigbar, da eine Drehbetätigung ohne lineare Auslenkung des Schalters gleichsam an Ort und Stelle erfolgen kann und somit nur sehr geringen Bewegungsfreiraum benötigt.

Um zu verhindern, dass bei einer Schaltbewegung des Schalthebels unerwünschterweise ein erstes Steuersignal erzeugt wird, ist die Drehbetätigungsachse vorteilhafterweise im Wesentlichen die Schalthebellängsachse. In diesem Falle ist die Drehbewegungsrichtung des Schalters orthogonal zur Schaltbewegung des Schalthebels um die Schaltachse.

Grundsätzlich ist es denkbar, dass der Schalter sowohl in der ersten als auch in der zweiten Betätigungsrichtung drehbetätigbar ist. Eine derartige Kinematik ist jedoch aufwendig vorzusehen. Einfacher ist es daher, wenn der Schalter als Betätigung in der zweiten Betätigungsrichtung im Wesentlichen translatorisch betätigbar ist. Dabei kann der Schalter so ausgebildet sein, dass der Betätigungsweg nur kurz ist, etwa 1 bis 5 mm, um eine schnelle Betätigung bei nur geringer Bewegungsfreiheit realisieren zu können.

Weiterhin ist es bevorzugt, wenn die translatorische Betätigung des Schalters in der zweiten Betätigungsrichtung eine Bewegungskomponente auf den Schalthebel zu aufweist, so dass der Schalter in der Art einer Druckbetätigung durch Niederdrücken betätigbar ist. Derartige Druckbetätigungen sind von zahlreichen anderen Schaltern bekannt und können somit leicht intuitiv erlernt werden.

Dann, wenn der Schalter um die Drehbetätigungsachse drehbetätigbar ist, verläuft die zweite Betätigungsrichtung vorteilhafterweise im Wesentlichen längs der Drehbetätigungsachse, so dass im Sinne der vorliegenden Anmeldung die erste und die zweite Betätigungsrichtung orthogonal zueinander sind und das Risiko einer versehentlichen unerwünschten Betätigung in der jeweils anderen Betätigungsrichtung reduziert ist.

Zur Erhöhung der Funktionalität zur Steuerung der wenigstens einen Vorrichtung im Fahrzeug kann der Fahrzeuggetriebe-Schalthebel derart weitergebildet sein, dass der Schalter in einer sowohl zur ersten als auch zur zweiten Betätigungsrichtung verschiedenen, vorzugsweise im Wesentlichen orthogonalen, dritten Betätigungsrichtung betätigbar ist, wobei der Schalter bei Betätigung in der dritten Betätigungsrichtung dritte Steuersignale erzeugt, welche zur Steuerung von wenigstens einer Vorrichtung im Fahrzeug ausgebildet sind.

Die dritte Betätigungsrichtung kann eine Drehbetätigung oder eine lineare Betätigung sein. Da jedoch ein um zwei zueinander orthogonale Drehbetätigungsachsen drehbetätigbarer Schalter nur mit verhältnismäßig großem Aufwand realisierbar ist, ist es aus Kostengründen bevorzugt, dass die dritte Betätigungsrichtung zumindest dann eine translatorische Betätigungsrichtung ist, wenn bereits die Betätigung des Schalters in der ersten oder der zweiten Betätigungsrichtung eine Drehbetätigung ist. Die Richtung einer Drehbetätigung und die Richtung einer translatorischen Betätigung sollen im Sinne dieser Anmeldung stets als zueinander orthogonal angesehen werden.

Gemäß weiterer möglicher Ausführungsformen der vorliegenden Erfindung kann der Schalter in drei zueinander verschiedenen, vorzugsweise im Wesentlichen orthogonalen Raumrichtungen translatorisch betätigbar sein und um eine, zwei oder sogar um drei zueinander orthogonale Drehbetätigungsachsen drehbetätigbar sein.

Aus Gründen einer einfachen konstruktiven Gestaltung des Schalters ist es bevorzugt, wenn die erste und die zweite Betätigungsrichtung einander entgegengesetzt sind. Dann kann der Schalter zur translatorischen Betätigung entlang einer Betätigungsachse betätigbar sein. Dies hat den Vorteil, dass lediglich eine einzige Bewegungsführung am Schalter vorgesehen werden muss, welche den Schalter zur Bewegung in die beiden entgegengesetzten Betätigungsrichtungen führt.

Sollte, wie oben bereits angedeutet, gewünscht sein, dass über das erste und das zweite Steuersignal hinaus weitere Steuersignale zur Steuerung wenigstens einer Vorrichtung im Fahrzeug zur Verfügung stehen, so kann gemäß einer Weiterbildung der vorliegenden Erfindung daran gedacht sein, dass der Schalter entlang einer von der ersten verschiedenen zweiten Betätigungsachse translatorisch betätigbar ist. So können beispielsweise die oben genannte dritte Betätigungsrichtung und eine hierzu entgegengesetzte vierte Betätigungsrichtung des Schalters realisiert sein.

In Weiterführung dieses Gedankens kann zur weiteren Erhöhung der verfügbaren Steuersignale um zwei der Schalter entlang einer von der ersten und der zweiten verschiedenen dritten Betätigungsachse translatorisch betätigbar sein.

Zur erleichterten Betätigung und zur Vermeidung von Fehlbetätigungen sind vorzugsweise die erste, die zweite und die dritte Betätigungsachse zur translatorischen Betätigung paarweise linear unabhängig, besonders bevorzugt orthogonal zueinander orientiert.

Alternativ oder zusätzlich kann der Schalter um eine erste Drehbetätigungsachse drehbetätigbar sein, wobei die erste und die zweite Betätigungsrichtung dann einander entgegengesetzte Drehbetätigungsrichtungen sind.

Analog zu den oben genannten Betätigungsachsen für die translatorische Betätigung kann wiederum zur Erhöhung der Anzahl der zur Verfügung stehenden Steuersignale der Schalter um eine von der ersten verschiedene zweite Drehbetätigungsachse drehbetätigbar sein und kann sogar um eine von der ersten und der zweiten verschiedene dritte Drehbetätigungsachse drehbetätigbar sein. Die Bewegbarkeit um eine Drehbetätigungsachse führt dabei stets zu zwei entgegengesetzten Drehbetätigungsrichtungen und somit zu zwei der betreffenden Drehbetätigungsachse zugeordneten Steuersignalen.

Wie schon bei den translatorischen Betätigungsachsen geschildert, sind die Drehbetätigungsachsen bevorzugt paarweise zueinander linear unabhängig, vorzugsweise zueinander orthogonal, um die jeweiligen Betätigungsrichtungen für die Bedienperson eindeutig unterscheidbar zu machen und Fehlbedienungen somit zu verhindern.

Sofern der Schalter sowohl translatorisch als auch rotatorisch betätigbar ist, ist es ergonomisch besonders vorteilhaft, wenn wenigstens eine Drehbetätigungsachse mit einer Betätigungsachse zur translatorischen Betätigung identisch ist. Vorzugsweise ist jede Drehbetätigungsachse mit einer Betätigungsachse zur translatorischen Betätigung identisch. Dies hat den Vorteil, dass eine Bedienperson in schneller zeitlicher Abfolge unterschiedliche Steuersignale erzeugen kann, da der Schalter, wenn er zur translatorischen Betätigung längs einer Betätigungsachse gegriffen ist, ohne Umgreifen auch um diese Achse drehbetätigt werden kann.

Es soll jedoch ausdrücklich nicht ausgeschlossen sein, dass wenigstens eine oder alle Drehbetätigungsachsen von den vorhandenen Betätigungsachsen zur translatorischen Betätigung verschieden sind.

Gemäß einer vorteilhaften Weiterbildung der vorliegenden Erfindung ist der Schalter am Schalthebel in eine Neutralstellung vorgespannt, aus der er zur Erzeugung eines Steuersignals in die jeweilige Betätigungsrichtung ausgelenkt und durch Vorspannkräfte selbständig zurückgestellt wird.

Alternativ hierzu kann der Schalter in seiner Drehbetätigungsrichtung um 360° um die Drehbetätigungsachse herum drehbar sein, wobei vorgesehen sein kann, dass in vorbestimmten Winkelabständen eine Erzeugung eines Steuersignals erfolgt. Zur haptischen Rückmeldung an den den Schalter betätigenden Fahrer kann im Winkelbereich der Steuersignalerzeugung eine wahrnehmbare Verrastung des Schalters bzw. seines Betätigungsteils vorgesehen sein. Diese Verrastung sollte durch geringe manuelle Kraft überwindbar sein.

Die Funktionalität des am Schalthebel vorgesehenen Schalters kann noch weiter dadurch erhöht werden, dass er ausgehend von der oben bezeichneten Neutralstellung nicht nur in die jeweilige Betätigungsrichtung sondern, wie oben bereits beschrieben, auch in die ihr entgegengesetzte Richtung betätigbar ist. Dies ist baulich mit einem sehr geringen Aufwand verbunden, da die Bewegbarkeit eines Schalters in der Regel ohne Ansehen der jeweiligen Richtung längs einer bzw. um eine Betätigungsachse realisiert ist.

Grundsätzlich kann daran gedacht sein, den einzelnen Steuersignalen eine feste Funktion zuzuweisen.

Bevorzugt ist der Schalter jedoch ein Multifunktionsschalter, bei welchen die einem Steuersignal zugeordnete Funktion abhängig ist von dem Zustand einer Steuervorrichtung, mit welcher der Schalter signalübertragungsmäßig verbunden ist. So kann die einem Steuersignal zugeordnete Funktion beispielsweise abhängig sein von vorhergehenden Betätigungen des Schalters und dadurch erzeugten Steuersignalen.

Beispielsweise kann eines der Steuersignale, welches durch eine vorbestimmte Betätigung des Schalters erzeugt wird, ein Funktionswechselsignal sein, das dazu dient, zwischen einer Mehrzahl von vorbestimmten Funktionsbefehlen zu wechseln. Beispielsweise kann in einer Steuervorrichtung eine Mehrzahl von Funktionsbefehlen hinterlegt sein, zwischen welchen durch das vorbestimmte Steuersignal gewechselt werden kann. Ein weiteres anderes Steuersignal, welches einer weiteren anderen Betätigung zugeordnet ist, kann dann ein Funktionsausführungssignal sein, derart, dass der durch das Funktionswechselsignal ausgewählte Funktionsbefehl durch das Funktionsausführungssignal zur Ausführung aktiviert wird.

Auf diese Art und Weise kann der oben beschriebene erfindungsgemäße Fahrzeuggetriebe-Schalthebel mit dem daran vorgesehenen Schalter zur Steuerung einer Mehrzahl von Vorrichtungen im Fahrzeug ausgebildet sein, insbesondere von Vorrichtungen, welche von dem durch den Schalthebel schaltbaren Getriebe unabhängig sind. Beispielsweise kann in einer ersten Menüebene die vom Fahrer zur Steuerung vorgesehene Vorrichtung des Fahrzeugs ausgewählt werden. Durch das erste Steuersignal kann zwischen den Vorrichtungen der Mehrzahl von Vorrichtungen gewechselt werden. Durch das zweite Steuersignal kann beispielsweise eine ausgewählte Vorrichtung zur Steuerung aktiviert werden, woraufhin man in eine weitere Menüebene gelangt, in der wiederum mit dem ersten Steuersignal zwischen nun vorrichtungsspezifischen Funktionsbefehlen gewechselt werden kann und mit dem zweiten Steuersignal ein momentan ausgewählter Funktionsbefehl aktiviert werden kann.

Vorteilhafterweise umfassen die Funktionsbefehle auch einen Rücksprung in eine nächsthöhere Menüebene, so dass eine unerwünschte Fehlbedienung korrigiert werden kann.

Beispielsweise kann in einer ersten Menüebene die Mehrzahl von Vorrichtungen eine Klimaanlage, ein Fahrzeugradio, ein Navigationssystem und dergleichen als Vorrichtungen umfassen. Nach Anwahl der Klimaanlage kann dann in einem weiteren Funktionsmenü das gewünschte Innenraumklima, definiert etwa durch Innenraumtemperatur, Luftfeuchtigkeit, Gebläsestärke usw. ausgewählt bzw. eingestellt werden. Bei Auswahl des Fahrzeugradios kann beispielsweise zwischen Menüpunkten, wie Senderwahl, Senderprogrammierung, Lautstärkeeinstellung usw. ausgewählt werden. Bei Auswahl des Navigationssystems kann zwischen Menüpunkten, wie Zielorteingabe, Navigationspräferenz (schnellster Weg, kürzester Weg, usw.), ggf. Zwischenzieleingabe/-änderung usw. ausgewählt werden.

Um dem Fahrer eine in möglichst kurzer Zeit intuitiv erlernbare Steuerung an die Hand zu geben, ist vorzugsweise das Funktionswechselsignal das durch Drehbetätigung um eine Drehbetätigungsachse erzeugte erste Steuersignal und ist das Funktionsausführungssignal eine durch eine translatorische Bewegung in Richtung der Drehbetätigungsachse erzeugbare zweite Steuersignal. In diesem Falle ist der Schalter bevorzugt als Dreh-DruckSchalter realisiert.

Die zuvor angesprochene und beschriebene Steuerung von wenigstens einer Vorrichtung, vorzugsweise einer Mehrzahl von Vorrichtungen des Fahrzeugs, kann weiterhin dadurch vereinfacht werden, dass der Schalter mit einer Anzeigeeinrichtung derart zusammenwirkt, dass vom Schalter bei dessen Betätigung erzeugte Steuersignale eine Änderung der Anzeige der Anzeigeeinrichtung bewirken. In diesem Falle kann der Fahrer an der Anzeigeeinrichtung ablesen, welche Funktion aktuell ausgewählt ist und durch entsprechende Betätigung aktiviert werden kann. Die Anzeigeeinrichtung selbst bildet dabei ebenfalls eine durch den Schalter steuerbare Vorrichtung des Fahrzeugs.

In der Anzeigeeinrichtung können beispielsweise alle oder ein Teil der Funktionen der jeweils aktiven Menüebene dargestellt und die momentan ausgewählte farblich oder sonst wie visuell hervorgehoben sein. Durch Erzeugen eines oben beschriebenen Funktionswechselsignals auf Grund einer entsprechenden Schalterbetätigung wird eine andere Funktion bzw. ein anderer Funktionsbefehl als momentan ausgewählt dargestellt. Bei Erzeugen eines Funktionsauswahlsignals kann der Aktivierungsvorgang des ausgewählten Funktionsbefehls ebenfalls visuell, etwa durch Blinken oder Farbänderung, dargestellt werden. In diesem Sinne ändert sich die Anzeige der Anzeigeeinrichtung bei Betätigung des Schalters. Aber auch eine akustische Anzeige ist zusätzlich oder alternativ zur visuellen denkbar.

Stellt die Anzeigeeinrichtung selbst eine zur Steuerung durch den Schalter vorgesehene Vorrichtung dar, kann beispielsweise durch Schalterbetätigung deren Helligkeit, Kontrast, Zentrierung usw. eingestellt werden, so dass sich auch in diesem Sinne die Anzeige der Anzeigeeinrichtung bei Betätigung des Schalters ändert.

Da, wie oben beschrieben, ein Fahrzeuggetriebe-Schalthebel, eine Anzeigeeinrichtung sowie eine Steuereinrichtung, welche signalübertragungsmäßig mit dem Schalter, der Anzeigeeinrichtung und ggf. mit wenigstens einer weiteren Fahrzeugvorrichtung verbunden ist, einem Fahrzeug einen besonderen Wert verleiht, wird für eine Baugruppe mit den oben beschriebenen Vorrichtungen gesonderter Schutz angestrebt.

Die Anzeigeeinrichtung kann beispielsweise einen TFT-Monitor umfassen.

Die Steuereinrichtung kann ein Bordcomputer sein, so dass der Schalter eine Befehlseingabevorrichtung für den Bordcomputer darstellt.

Wie oben bereits beschrieben wurde, kann bei der Baugruppe die Anzeigeeinrichtung zur Darstellung eines Funktionsmenüs der Steuereinrichtung oder/und der Anzeigeeinrichtung selbst ausgebildet sein, wobei ferner der Schalter dazu ausgebildet ist, durch Steuersignale zwischen den Funktionen des Funktionsmenüs zu wechseln und durch weitere Steuersignale eine Funktion des Funktionsmenüs zu aktivieren.

Die vorliegende Erfindung wird im weiteren anhand der beiliegenden Figuren näher beschrieben werden. Es stellt dar:

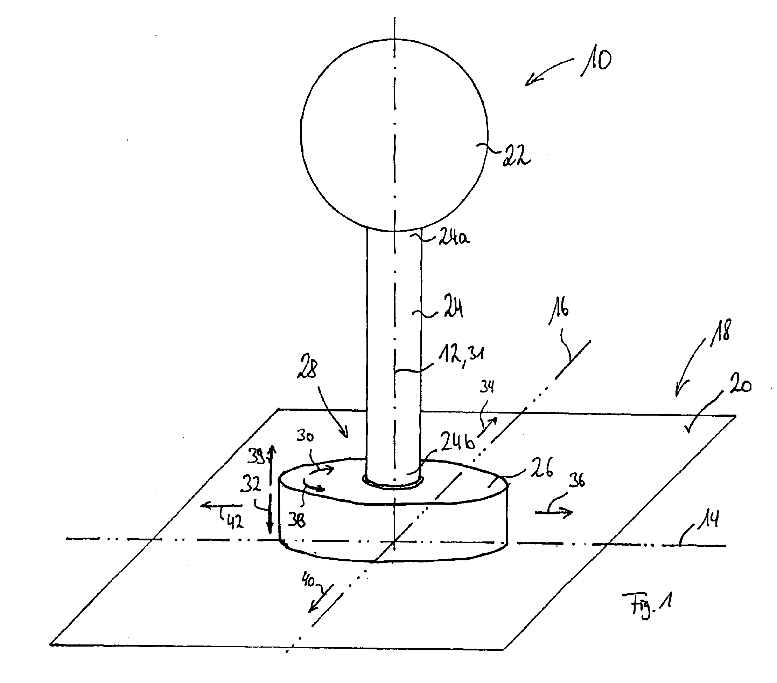

- Fig. 1: eine Ausführungsform der vorliegenden Erfindung.

In Fig. 1 ist ein erfindungsgemäßer Fahrzeuggetriebe-Schalthebel allgemein mit 10 bezeichnet.

Der Schalthebel 10 erstreckt sich längs einer Schalthebellängsachse 12 und ist zum Schalten eines Fahrzeuggetriebes um eine zur Schalthebellängsachse 12 orthogonale Schaltachse 14 schwenkbar. Weiterhin kann der Schalthebel 10 verschiedene Schaltgassen aufweisen, etwa eine manuelle und eine Automatik-Schaltgasse, welche durch Verschwenken des Schalthebels 10 um die sowohl zur Schalthebellängsachse 12 als auch zur Schaltachse 14 im Wesentlichen orthogonale Gassenwahlachse 16 wählbar sind.

Der Schalthebel 10 ist an einer Mittelkonsole 18 vorgesehen, von welcher ein Ausschnitt einer im Wesentlichen ebenen Oberfläche 20 gezeigt ist.

Der Schalthebel 10 umfasst einen Schaltknauf 22 und einen den Schaltknauf 22 an einem seiner Längsenden tragenden Schaft 24.

Genauer ist der Schaltknauf 22 an dem schaltknaufnahen Längsende 24a des Schafts vorgesehen, während an dem der Schaltachse 14 nahen Längsende 24b des Schaftes ein Betätigungsteil 26 eines allgemein mit 28 bezeichneten Schalters vorgesehen ist.

Das die Schalthebellängsachse 12 vollständig umschließende Betätigungsteil 26 ist, bei Betrachtung der in Fig. 1 gezeigten Neutralstellung des Schalthebels 10, relativ zum Schalthebel 10 in einer ersten Betätigungsrichtung längs des Pfeils 30 um die Schalthebellängsachse 12 als Drehbetätigungsachse 31 drehbetätigbar, längs eines zur Schalthebellängsachse 12 parallelen Pfeils 32 in einer zweiten Betätigungsrichtung translatorisch betätigbar, längs eines zur Gassenwahlachse 16 parallelen Pfeils 34 in einer dritten Betätigungsrichtung betätigbar und ist längs eines zur Schaltachse 14 im Wesentlichen parallelen Pfeils 36 in einer vierten Betätigungsrichtung translatorisch betätigbar. Der Schalter 28 ist somit ein Dreh-Druck-SchiebeSchalter.

Weiterhin ist das Betätigungsteil 26 in einer jeweils der ersten, der zweiten, der dritten und der vierten Betätigungsrichtung entgegengesetzten Betätigungsrichtung betätigbar, wie durch die Pfeile 38, 39, 40 und 42 angezeigt ist. Durch die Bewegbarkeit des Betätigungsteils in acht deutlich unterscheidbare Betätigungsrichtungen können acht verschiedene und unterscheidbare Steuersignale erzeugt werden. Werden nicht alle acht unterscheidbaren Steuersignale benötigt, so werden entsprechenden Steuersignalen keine Funktionen zugeordnet, so dass eine Betätigung des Betätigungsteils 26 in der dem funktionslosen Steuersignal zugeordneten Betätigungsrichtung ohne Wirkung bleibt.

Das Betätigungsteil 26 ist in eine in Fig. 1 gezeigte Neutralstellung vorgespannt, und muss vom Fahrer gegen die Vorspannkraft in die jeweilige Betätigungsrichtung ausgelenkt werden. Bei Loslassen des Betätigungsteils 26 stellt sich dieses selbständig in die Neutralstellung zurück.

Alternativ kann das Betätigungsteil 26 in Richtung der Pfeile 30 und 38 um 360° um die Drehbetätigungsachse 31 herum drehbar sein. Dabei kann vorgesehen sein, dass in vorbestimmten Winkelschritten jeweils ein Steuersignal erzeugt wird, welches zur Steuerung von wenigstens einer Vorrichtung dient, beispielsweise zum Wechseln zwischen einer Mehrzahl von vorbestimmten Funktionsbefehlen.

Zur haptischen Rückmeldung an den Fahrer kann vorgesehen sein, dass in den Winkelstellungen, in welchen eine Signalerzeugung erfolgt, eine fühlbare Verrastung des Betätigungsteils in der jeweiligen Drehstellung erfolgt. Diese Verrastung ist zur Erzeugung weiterer Steuersignale durch Drehung des Betätigungsteils 26 in Richtung der Pfeile 30 oder/und 38 durch Aufbringen geringer manueller Kraft überwindbar.

Die Signalerzeugung im Schalter 28 kann beispielsweise durch nicht dargestellte Mikroschalter realisiert sein, welche durch Bewegung des Betätigungsteils 26 in die jeweilige Betätigungsrichtung betätigt werden.

## Patentansprüche

1. Fahrzeuggetriebe-Schalthebel, welcher sich längs einer Schalthebellängsachse (12) erstreckt und welcher um eine zur Schalthebellängsachse (12) im Wesentlichen orthogonale Schaltachse (14) zum Schalten eines Fahrzeuggetriebes schwenkbar ist, wobei an dem Schalthebel (10) ein Schalter (28) vorgesehen ist, welcher unabhängig von einer Schaltbewegung des Schalthebels (10) in einer ersten (30) und einer von der ersten (30) verschiedenen zweiten Betätigungsrichtung (32) betätigbar ist, wobei der Schalter (28) bei Betätigung in der ersten Betätigungsrichtung (30) erste Steuersignale erzeugt und bei Betätigung in der zweiten Betätigungsrichtung (32) zweite Steuersignale erzeugt, welche ersten und zweiten Steuersignale zur Steuerung von wenigstens einer Vorrichtung im Fahrzeug ausgebildet sind,
wobei der Schalter (28) ein Betätigungsteil (26) aufweist, welches die Schalthebellängsachse (12) umgebend vorgesehen ist, **dadurch gekennzeichnet, dass** das Betätigungsteil (26) im Bereich des schaltachsennahen Längsendes (24) des Schalthebels (10) vorgesehen ist und gleichzeitig als Abdeckung der Schalthebellagerung verwendet wird.

2. Fahrzeuggetriebe-Schalthebel nach Anspruch 1,
**dadurch gekennzeichnet, dass** die erste (30) und die zweite Betätigungsrichtung (32) im Wesentlichen orthogonal zueinander sind.

3. Fahrzeuggetriebe-Schalthebel nach Anspruch 1,
**dadurch gekennzeichnet, dass** der Schalter (28) als Betätigung in der ersten Betätigungsrichtung (30) um eine Drehbetätigungsachse (31) drehbetätigbar ist.

4. Fahrzeuggetriebe-Schalthebel nach Anspruch 3,
**dadurch gekennzeichnet, dass** die Drehbetätigungsachse (31) im Wesentlichen die Schalthebellängsachse (12) ist.

5. Fahrzeuggetriebe-Schalthebel nach einem der vorhergehenden Ansprüche,
**dadurch gekennzeichnet, dass** der Schalter (28) als Betätigung in der zweiten Betätigungsrichtung (32) im Wesentlichen translatorisch betätigbar ist.

6. Fahrzeuggetriebe-Schalthebel nach Anspruch 3 oder 4 und Anspruch 5,
**dadurch gekennzeichnet, dass** die zweite Betätigungsrichtung (32) im Wesentlichen längs der Drehbetätigungsachse (31) verläuft.

7. Fahrzeuggetriebe-Schalthebel nach einem der vorhergehenden Ansprüche,
**dadurch gekennzeichnet, dass** der Schalter (28) in einer sowohl von der ersten (30) als auch von der zweiten Betätigungsrichtung (32) verschiedenen, vorzugsweise im Wesentlichen zu diesen orthogonalen, dritten Betätigungsrichtung (34) betätigbar ist, wobei der Schalter (28) bei Betätigung in der dritten Betätigungsrichtung (34) dritte Steuersignale erzeugt, welche zur Steuerung von wenigstens einer Vorrichtung im Fahrzeug ausgebildet sind.

8. Fahrzeuggetriebe-Schalthebel nach Anspruch 1,
**dadurch gekennzeichnet, dass** der Schalter entlang einer ersten Betätigungsachse translatorisch betätigbar ist, wobei die erste und die zweite Betätigungsrichtung einander entgegengesetzt sind.

9. Fahrzeuggetriebe-Schalthebel nach Anspruch 8,
**dadurch gekennzeichnet, dass** der Schalter entlang einer von der ersten verschiedenen, vorzugsweise zu dieser orthogonalen, zweiten Betätigungsachse translatorisch betätigbar ist, wobei der Schalter bei Betätigung in einer dritten Betätigungsrichtung entlang der zweiten Betätigungsachse dritte Steuersignale und in einer zur dritten entgegengesetzten vierten Betätigungsrichtung vierte Steuersignale erzeugt.

10. Fahrzeuggetriebe-Schalthebel nach Anspruch 9,
**dadurch gekennzeichnet, dass** der Schalter entlang einer von der ersten und der zweiten verschiedenen, vorzugsweise zu diesen orthogonalen, dritten Betätigungsachse translatorisch betätigbar ist, wobei der Schalter bei Betätigung in einer fünften Betätigungsrichtung entlang der dritten Betätigungsachse fünfte Steuersignale und in einer zur fünften entgegengesetzten sechsten Betätigungsrichtung sechste Steuersignale erzeugt.

11. Fahrzeuggetriebe-Schalthebel nach Anspruch 1,
**dadurch gekennzeichnet, dass** der Schalter um eine erste Drehbetätigungsachse drehbetätigbar ist, wobei die erste und die zweite Betätigungsrichtung einander entgegengesetzte Drehbetätigungsrichtungen sind.

12. Fahrzeuggetriebe-Schalthebel nach Anspruch 11,
**dadurch gekennzeichnet, dass** der Schalter um eine von der ersten verschiedene, vorzugsweise zu dieser orthogonale, zweite Drehbetätigungsachse drehbetätigbar ist, wobei eine dritte Betätigungsrichtung eine Drehbetätigungsrichtung ist, und wobei der Schalter bei Betätigung in der dritten Betätigungsrichtung um die zweite Drehbetätigungsachse dritte Steuersignale und in einer zur dritten entgegengesetzten vierten Drehbetätigungsrichtung vierte Steuersignale erzeugt.

13. Fahrzeuggetriebe-Schalthebel nach Anspruch 12,
**dadurch gekennzeichnet, dass** der Schalter um eine von der ersten und der zweiten verschiedene, vorzugsweise zu diesen orthogonale, dritte Drehbetätigungsachse drehbetätigbar ist, wobei der Schalter bei Drehbetätigung in einer fünften Drehbetätigungsrichtung um die dritte Drehbetätigungsachse fünfte Steuersignale und bei Drehbetätigung in einer zur fünften entgegengesetzten sechsten Drehbetätigungsrichtung sechste Steuersignale erzeugt.

14. Fahrzeuggetriebe-Schalthebel nach einem der Ansprüche 8 bis 10,
**dadurch gekennzeichnet, dass** der Schalter um eine erste Drehbetätigungsachse drehbetätigbar ist, wobei der Schalter bei Drehbetätigung in einer ersten Drehbetätigungsrichtung um die erste Drehbetätigungsachse siebte Steuersignale und in einer dazu entgegengesetzten zweiten Drehbetätigungsrichtung achte Steuersignale erzeugt.

15. Fahrzeuggetriebe-Schalthebel nach Anspruch 14,
**dadurch gekennzeichnet, dass** der Schalter um eine von der ersten verschiedene, vorzugsweise zu dieser orthogonale, zweite Drehbetätigungsachse drehbetätigbar ist, wobei der Schalter bei Drehbetätigung in einer dritten Drehbetätigungsrichtung um die zweite Drehbetätigungsachse neunte Steuersignale und in einer dazu entgegengesetzten vierten Drehbetätigungsrichtung zehnte Steuersignale erzeugt.

16. Fahrzeuggetriebe-Schalthebel nach Anspruch 15,
**dadurch gekennzeichnet, dass** der Schalter um eine von der ersten und der zweiten verschiedene, vorzugsweise zu diesen orthogonale, dritte Drehbetätigungsachse drehbetätigbar ist, wobei der Schalter bei Drehbetätigung in einer fünften Drehbetätigungsrichtung um die dritte Drehbetätigungsachse elfte Steuersignale und in einer dazu entgegengesetzten sechsten Drehbetätigungsrichtung zwölfte Steuersignale erzeugt.

17. Fahrzeuggetriebe-Schalthebel nach einem der vorhergehenden Ansprüche,
**dadurch gekennzeichnet, dass** ein durch eine Betätigung erzeugtes Steuersignal ein Funktionswechselsignal zum Wechseln zwischen einer Mehrzahl von vorbestimmten Funktionsbefehlen ist und dass ein durch eine weitere andere Betätigung erzeugtes weiteres Steuersignal ein Funktionsausführungssignal zur Ausführung eines Funktionsbefehls ist.

18. Fahrzeuggetriebe-Schalthebel nach einem der vorhergehenden Ansprüche,
**dadurch gekennzeichnet, dass** der Schalter (28) mit einer Anzeigeeinrichtung derart zusammenwirkt, dass vom Schalter (28) bei dessen Betätigung erzeugte Steuersignale eine Änderung der Anzeige der Anzeigeeinrichtung bewirken.

19. Baugruppe umfassend einen Fahrzeuggetriebe-Schalthebel (10) nach Anspruch 18, eine Anzeigeeinrichtung sowie eine Steuereinrichtung, welche Steuereinrichtung signalübertragungsmäßig mit dem Schalter (28), der Anzeigeeinrichtung und gegebenenfalls mit wenigstens einer weiteren Fahrzeugvorrichtung verbunden ist.

20. Baugruppe nach Anspruch 19,
**dadurch gekennzeichnet, dass** die Anzeigeeinrichtung zur Darstellung eines Funktionsmenüs der Steuereinrichtung oder/und der Anzeigeeinrichtung selbst ausgebildet ist, wobei ferner der Schalter (28) dazu ausgebildet ist, durch Steuersignale zwischen den Funktionen des Funktionsmenüs zu wechseln und durch weitere Steuersignale eine Funktion des Funktionsmenüs zu aktivieren.

## Claims

1. Vehicle gear lever, which extends along a gear lever longitudinal axis (12) and which for shifting a vehicle transmission is pivotable about a shift axis (14) substantially perpendicular to the gear lever longitudinal axis (12), a switch (28), which can be operated in a first operating direction (30) and a second operating direction (32) different from the first operating direction (30) independently of a shift movement of the gear lever (10), being arranged on the gear lever (10), the switch generating first control signals when operated in the first operating direction (30) and second operating signals when operated in the second operating direction (32), said first and second control signals being designed to control at least one device in the vehicle, the switch (28) having an operating part (26), which surrounds the gear lever longitudinal axis (12), **characterized in that** the operating part (26) is provided in the area of the longitudinal end (24) of the gear lever (10) close to the shift axis and at the same time is used as cover for the gear lever bearing.

2. Vehicle transmission gear lever according to Claim 1, **characterized in that** the first operating direction (30) and the second operating direction (32) are substantially perpendicular to one another.

3. Vehicle transmission gear lever according to Claim 1, **characterized in that** for operation in the first operating direction (30) the switch (28) can be operated by rotation about a rotational operating axis (31).

4. Vehicle transmission gear lever according to Claim 3, **characterized in that** the rotational operating axis (31) is substantially the gear lever longitudinal axis (12).

5. Vehicle transmission gear lever according to any one of the preceding claims, **characterized in that** for operation in the second operating direction (32) the switch (28) can be operated substantially by translation.

6. Vehicle transmission gear lever according to Claim 3 or 4, **characterized in that** the second operating direction (32) runs substantially along the rotational operating axis (31).

7. Vehicle transmission gear lever according to any one of the preceding claims, **characterized in that** the switch (28) can be operated in a third operating direction (34), different both from the first operating direction (30) and from the second operating direction (32), preferably substantially perpendicular to these, the switch (28) when operated in the third operating direction (34) generating third control signals, which are designed to control at least one device in the vehicle.

8. Vehicle transmission gear lever according to Claim 1, **characterized in that** the switch can be operated by translation along a first operating axis, the first operating direction and the second operating direction being opposed to one another.

9. Vehicle transmission gear lever according to Claim 8, **characterized in that** the switch can be operated by translation along a second operating axis different from the first operating axis, preferably perpendicular thereto, the switch generating third control signals when operated in a third operating direction along the second operating axis and fourth control signals in a fourth operating direction opposed to the third operating direction.

10. Vehicle transmission gear lever according to Claim 9, **characterized in that** the switch can be operated by translation along a third operating axis different from the first operating axis and the second operating axis, preferably perpendicular to these, the switch generating fifth control signals when operated in a fifth operating direction along the third operating axis and sixth control signals in a sixth operating direction opposed to the fifth operating direction.

11. Vehicle transmission gear lever according to Claim 1, **characterized in that** the switch can be operated by rotation about a first rotational operating axis, the first operating direction and the second operating direction being rotational operating directions opposed to one another.

12. Vehicle transmission gear lever according to Claim 11, **characterized in that** the switch can be operated by rotation about a second rotational operating axis different from the first rotational operating axis, preferably perpendicular thereto, a third operating direction being a rotational operating direction, and the switch generating third control signals when operated in the third operating direction about the second rotational operating axis and fourth control signals in a fourth rotational operating direction opposed to the third rotational operating direction.

13. Vehicle transmission gear lever according to Claim 12, **characterized in that** the switch can be operated by rotation about a third rotational operating axis different from the first rotational operating axis and the second rotational operating axis, preferably perpendicular to these, the switch generating fifth control signals when operated by rotation in a fifth rotational operating direction about the third rotational operating axis and sixth control signals in a sixth rotational operating direction opposed to the fifth rotational operating direction.

14. Vehicle transmission gear lever according to any one of Claims 8 to 10, **characterized in that** the switch can be operated by rotation about a first rotational operating axis, the switch generating seventh control signals when operated by rotation in a first rotational operating direction about the first rotational operating axis and eighth control signals in a second rotational operating direction in opposition thereto.

15. Vehicle transmission gear lever according to Claim 14, **characterized in that** the switch can be operated by rotation about a second rotational operating axis different from the first rotational operating axis, preferably perpendicular thereto, the switch generating ninth control signals when operated by rotation in a third rotational operating direction about the second rotational operating axis and tenth control signals in a fourth rotational operating direction in opposition thereto.

16. Vehicle transmission gear lever according to Claim 15, **characterized in that** the switch can be operated by rotation about a third rotational operating axis different from the first rotational operating axis and the second rotational operating axis, preferably perpendicular to these, the switch generating eleventh control signals when operated by rotation in a fifth rotational operating direction about the third rotational operating axis and twelfth control signals in a sixth rotational operating direction in opposition thereto.

17. Vehicle transmission gear lever according to any one of the preceding Claims, **characterized in that** a control signal generated by an operation is a function-changing signal for switching between a plurality of predetermined function commands and that a further, different control signal generated by a further operation is a function execution signal for the execution of a function command.

18. Vehicle transmission gear lever according to any one of the preceding Claims, **characterized in that** the switch (28) interacts with a display device in such a way that control signals generated when the switch (28) is operated produce a change in the display on the display device.

19. Assembly comprising a vehicle transmission gear lever (10) according to Claim 18, a display device and a control device, the control device being connected for the transmission of signals to the switch (28), the display device and possibly to at least one further vehicle device.

20. Assembly according to Claim 19, **characterized in that** the display device is designed to represent a function menu of the control device and/or of the display device itself, the switch (28) furthermore being designed to switch between the functions of the function menu by means of control signals and to activate a function of the function menu by means of further control signals.

## Revendications

1. Levier de vitesses pour le mécanisme de transmission d'un véhicule, qui suit la longueur d'un axe longitudinal de levier de vitesses (12) et qui peut être pivoté autour d'un axe de sélection de vitesses (14) essentiellement orthogonal par rapport à l'axe longitudinal de levier de vitesses (12) pour le passage des vitesses sur la boîte de vitesses d'un véhicule, un commutateur (28) étant prévu sur le levier de vitesses (10), qui peut être actionné indépendamment d'un mouvement de sélection de vitesses du levier de vitesses (10), selon une première direction de manoeuvre (30) et une deuxième direction de manoeuvre (32) différente de la première (30), le commutateur (28) produisant des premiers signaux de commande lors d'un actionnement dans la première direction de manoeuvre (30) et des deuxièmes signaux de commande lors d'un actionnement dans la deuxième direction de manoeuvre (32), les premiers et les deuxièmes signaux de commande étant conçus pour la commande d'au moins un dispositif dans le véhicule,
dans lequel le commutateur (28) comporte une pièce d'actionnement (26) qui entoure l'axe longitudinal (12) du levier de vitesses, **caractérisé en ce que** la pièce d'actionnement (26) est prévue dans la région de l'extrémité longitudinale (24) du levier de vitesses (10) à proximité de l'axe de sélection de vitesses et **en ce qu'**elle sert en même temps de couvercle au logement du levier de vitesses.

2. Levier de vitesses pour le mécanisme de transmission d'un véhicule selon la revendication 1, **caractérisé en ce que** la première (30) et la deuxième directions de manoeuvre (32) sont essentiellement orthogonales l'une par rapport à l'autre.

3. Levier de vitesses pour le mécanisme de transmission d'un véhicule selon la revendication 1, **caractérisé en ce que** le commutateur (28) est conçu de façon à effectuer une rotation autour d'un axe de manoeuvre par rotation (31) lorsqu'il est actionné selon la première direction de manoeuvre (30).

4. Levier de vitesses pour le mécanisme de transmission d'un véhicule selon la revendication 3, **caractérisé en ce que** l'axe de manoeuvre par rotation (31) est essentiellement constitué de l'axe longitudinal (12) du levier de vitesses.

5. Levier de vitesses pour le mécanisme de transmission d'un véhicule selon l'une des précédentes revendications,
**caractérisé en ce que** le commutateur (28) est actionné essentiellement par translation lorsqu'il est actionné selon la deuxième direction de manoeuvre (32).

6. Levier de vitesses pour le mécanisme de transmission d'un véhicule selon la revendication 3 ou 4 et la revendication 5,
**caractérisé en ce que** la deuxième direction de manoeuvre (32) suit principalement le sens de la longueur de l'axe de manoeuvre par rotation (31).

7. Levier de vitesses pour le mécanisme de transmission d'un véhicule selon l'une des précédentes revendications,
**caractérisé en ce que** le commutateur (28) peut être actionné selon une troisième directions de manoeuvre (34) différente de la première (30) et de la deuxième directions de manoeuvre (32), de préférence essentiellement orthogonale par rapport à celles-ci, le commutateur (28) produisant des troisièmes signaux de commande lors d'un actionnement selon la troisième direction de manoeuvre (34), ces signaux étant conçus pour la commande d'au moins un dispositif dans le véhicule.

8. Levier de vitesses pour le mécanisme de transmission d'un véhicule selon la revendication 1, **caractérisé en ce que** le commutateur peut être actionné par translation le long d'un premier axe de manoeuvre, la première et la deuxième directions de manoeuvre étant opposées l'une par rapport à l'autre.

9. Levier de vitesses pour le mécanisme de transmission d'un véhicule selon la revendication 8, **caractérisé en ce que** le commutateur peut être actionné par translation le long d'un deuxième axe de manoeuvre différent du premier et préférentiellement orthogonal par rapport à celui-ci, le commutateur produisant des troisièmes signaux de commande lors d'un actionnement selon une troisième direction de manoeuvre le long du deuxième axe de manoeuvre, ainsi que des quatrièmes signaux de commande lors d'un actionnement selon une quatrième direction de manoeuvre opposée à la troisième.

10. Levier de vitesses pour le mécanisme de transmission d'un véhicule selon la revendication 9, **caractérisé en ce que** le commutateur peut être actionné par translation le long d'un troisième axe de manoeuvre différent du premier et du deuxième, de préférence orthogonal par rapport à ceux-ci, le commutateur produisant des cinquièmes signaux de commande lors d'un actionnement selon une cinquième direction de manoeuvre le long du troisième axe de manoeuvre et des sixièmes signaux de commande lors d'un actionnement selon une sixième direction de manoeuvre dans le sens opposé de la cinquième.

11. Levier de vitesses pour le mécanisme de transmission d'un véhicule selon la revendication 1, **caractérisé en ce que** le commutateur peut être actionné de façon à effectuer une rotation autour d'un premier axe de manoeuvre par rotation, la première et la deuxième directions de manoeuvre étant des directions de manoeuvre par rotation opposées l'une par rapport à l'autre.

12. Levier de vitesses pour le mécanisme de transmission d'un véhicule selon la revendication 11, **caractérisé en ce que** le commutateur peut être actionné de façon à effectuer une rotation autour d'un deuxième axe de manoeuvre par rotation, différent du premier et préférentiellement orthogonal par rapport à celui-ci, une troisième direction de manoeuvre correspondant à une direction de manoeuvre par rotation, et le commutateur produisant des troisièmes signaux de commande lors d'un actionnement selon la troisième direction de manoeuvre autour du deuxième axe de manoeuvre par rotation, ainsi que des quatrièmes signaux de commande lors d'un actionnement selon une quatrième direction de manoeuvre par rotation opposée à la troisième.

13. Levier de vitesses pour le mécanisme de transmission d'un véhicule selon la revendication 12, **caractérisé en ce que** le commutateur peut être actionné de façon à effectuer une rotation autour d'un troisième axe de manoeuvre par rotation, différent du premier et du deuxième et préférentiellement orthogonal par rapport à ceux-ci, le commutateur produisant des cinquièmes signaux de commande lors d'un actionnement par rotation selon une cinquième direction de manoeuvre par rotation autour du troisième axe de manoeuvre par rotation, ainsi que des sixièmes signaux de commande lors d'un actionnement selon une sixième direction de manoeuvre par rotation opposée à la cinquième.

14. Levier de vitesses pour le mécanisme de transmission d'un véhicule selon l'une des revendications 8 à 10,
**caractérisé en ce que** le commutateur peut être actionné de façon à effectuer une rotation autour d'un premier axe de manoeuvre par rotation, le commutateur produisant des septièmes signaux de commande lors d'un actionnement par rotation selon une première direction de manoeuvre par rotation autour du premier axe de manoeuvre par rotation, ainsi que des huitièmes signaux de commande lors d'un actionnement selon une deuxième direction de manoeuvre par rotation opposée à la première.

15. Levier de vitesses pour le mécanisme de transmission d'un véhicule selon la revendication 14,
**caractérisé en ce que** le commutateur peut être actionné de façon à effectuer une rotation autour d'un deuxième axe de manoeuvre par rotation différent du premier et préférentiellement orthogonal par rapport à celui-ci, le commutateur produisant des neuvièmes signaux de commande lors d'un actionnement par rotation selon une troisième direction de manoeuvre par rotation autour du deuxième axe de manoeuvre par rotation, ainsi que des dixièmes signaux de commande lors d'un actionnement selon une quatrième direction de manoeuvre par rotation opposée à la troisième.

16. Levier de vitesses pour le mécanisme de transmission d'un véhicule selon la revendication 15,
**caractérisé en ce que** le commutateur peut être actionné de façon à effectuer une rotation autour d'un troisième axe de manoeuvre par rotation différent du premier et du deuxième et préférentiellement orthogonal par rapport à ceux-ci, le commutateur produisant des onzièmes signaux de commande lors d'un actionnement par rotation selon une cinquième direction de manoeuvre par rotation autour du troisième axe de manoeuvre par rotation par rotation ainsi que des douzièmes signaux de commande lors d'un actionnement selon une sixième direction de manoeuvre par rotation opposée à la cinquième.

17. Levier de vitesses pour le mécanisme de transmission d'un véhicule selon l'une des précédentes revendications,
**caractérisé en ce qu'**un signal de commande produit lors d'un actionnement correspond à un signal de changement de fonction permettant de basculer entre une multitude d'ordres de fonction prédéfinis, et **en ce qu'**un autre signal de commande produit par un autre actionnement correspond à un signal d'exécution de fonction permettant d'exécuter un ordre de fonction.

18. Levier de vitesses pour le mécanisme de transmission d'un véhicule selon l'une des précédentes revendications,
**caractérisé en ce que** le commutateur (28) agit conjointement avec un dispositif d'affichage, de telle sorte que les signaux de commande produits par le commutateur (28) lors de son actionnement entraînent un changement d'affichage sur le dispositif d'affichage.

19. Bloc comprenant un levier de vitesses (10) pour le mécanisme de transmission d'un véhicule selon la revendication 18, un dispositif d'affichage ainsi qu'un dispositif de commande, ce dispositif de commande étant relié par transmission de signaux au commutateur (28), au dispositif d'affichage et selon les cas à au moins un autre dispositif dans le véhicule.

20. Bloc selon la revendication 19,
**caractérisé en ce que** le dispositif d'affichage est conçu pour présenter un menu de fonctions du dispositif de commande et/ou du dispositif d'affichage lui-même, le commutateur (28) étant par ailleurs conçu pour basculer entre les fonctions du menu de fonctions au moyen de signaux de commande et pour activer une fonction du menu de fonctions au moyen d'autres signaux de commande.
